Europäisches Patentamt

European Patent Office

Office européen des brevets

(19)

(11) Numéro de publication: **0 191 665**
**B1**

(12) **FASCICULE DE BREVET EUROPEEN**

(45) Date de publication du fascicule du brevet:
**17.11.88**

(21) Numéro de dépôt: **86400060.9**

(22) Date de dépôt: **13.01.86**

(51) Int. Cl.⁴: **B 64 D 11/06**

(54) **Poste de pilotage pourvu d'un manche à balai latéral actionnable par une seule main et siège pour un tel poste de pilotage.**

(30) Priorité: **18.01.85 FR 8500737**

(43) Date de publication de la demande:
**20.08.86 Bulletin 86/34**

(45) Mention de la délivrance du brevet:
**17.11.88 Bulletin 88/46**

(84) Etats contractants désignés:
**DE GB IT NL**

(56) Documents cités:
**DE - A - 1 929 358**
**GB - A - 1 337 585**
**GB - A - 2 073 114**
**US - A - 4 012 014**

**INTERAVIA, vol. 20, septembre 1965, page 1366;**
**"Commandé pour le dernier Trident"**
**AIRCRAFT ENGINEERING, vol. 56, juin 1984, page 10;**
**"Make your own crew seats"**

(73) Titulaire: **AEROSPATIALE SOCIETE NATIONALE**
**INDUSTRIELLE, 37, Boulevard de Montmorency,**
**F-75781 Paris Cédex 16 (FR)**

(72) Inventeur: **Vauvelle, Bernard, 3 avenue de la Gare,**
**F-31490 Leguevin (FR)**
Inventeur: **Chancholle, Hubert, 9, Impasse Delpont,**
**F-31700 Blagnac (FR)**

(74) Mandataire: **Bonnetat, Christian et al, Cabinet PROPI**
**Conseils 23 rue de Léningrad, F-75008 Paris (FR)**

## Description

La présente invention concerne un poste de pilotage pour engins, notamment pour aéronefs, pourvu d'un organe mécanique de pilotage du type manche à balai, disposé latéralement par rapport au pilote et actionnable d'une seule main par celui-ci, ainsi qu'un siège pour un tel poste de pilotage.

On connaît déjà, notamment pour le pilotage des aéronefs, un tel organe mécanique de pilotage, généralement appelé «minimanche», qui est monté à poste fixe à bord de l'engin au moins approximativement en prolongement vers l'avant d'un appui-bras du siège du pilote. Cet organe mécanique de pilotage est susceptible de pivoter, avec des amplitudes limitées, parallèlement à deux axes:

– d'une part, l'axe longitudinal de l'aéronef pour assurer le pilotage en tangage;

– d'autre part, l'axe transversal de l'aéronef pour assurer le pilotage en roulis.

Ces deux mouvements de pivotement, produits éventuellement simultanément, sont effectués par la main du pilote, suivant un déplacement latéral associé à une torsion du poignet ou suivant un déplacement longitudinal par flexion du poignet associée à de très légers débattements de l'avant-bras.

Tous ces mouvements sont précis et doivent représenter la volonté du pilote pour assurer avec précision le contrôle de la trajectoire de l'aéronef et ceci, quelles que soient les conditions environnantes, même défavorables, comme une forte perturbation extérieure, un orage, des facteurs de charge transitoires, etc. De ce fait, en phase de pilotage manuel, il est indispensable que l'avant-bras du pilote soit soutenu, maintenu en position, en laissant toute liberté à la main pour ses déplacements.

C'est pourquoi, dans un poste de pilotage pourvu d'un tel organe mécanique de pilotage, on prévoit un appui-bras fixe, solidaire de la planche de bord latérale dudit poste de pilotage et aligné avec ledit organe.

Par ailleurs, le siège sur lequel est assis le pilote (ou le copilote) doit être réglable en position et/ou en hauteur pour pouvoir s'adapter à toutes les morphologies humaines existantes, ainsi qu'à la phase de vol en cours (voir par exemple: Interavia, vol. 20, septembre 1965, page 1366, «Commandé pour le dernier Trident»). On sait, en effet, que suivant la configuration de vol (décollage, atterrissage, croisière, enclenchement du pilote automatique, etc.) le pilote doit pouvoir avancer ou reculer son siège. On comprendra aisément par exemple qu'en pilotage manuel le siège doit être avancé pour que le pilote ait tous les organes de commande rapidement à sa disposition, alors qu'en vol en pilotage automatique le siège peut être reculé pour procurer un plus grand confort au pilote, puisqu'alors le rôle de celui-ci se limite à la surveillance des paramètres de vol.

Toutefois, cette mobilité nécessaire du siège du pilote est en contradiction avec l'appui-bras associé à l'organe de pilotage latéral, puisque cet appui-bras est fixe: par suite, cet appui-bras latéral impose une position précise au pilote, ainsi qu'à son siège et même au dossier de ce siège. Ainsi, l'organe de pilotage latéral à une seule main, dont l'adoption a notamment pour but de faciliter le pilotage et d'apporter du confort au pilote dans son travail en comparaison avec les manches à balai centraux à deux mains usuels, conduit par ailleurs à une diminution du confort du pilote par la fixité de position du siège qu'il impose.

De plus, le siège du pilote est de façon usuelle un fauteuil pourvu d'appui-bras. Par suite, l'appui-bras du fauteuil disposé du côté de l'appui-bras latéral fixe associé à l'organe de pilotage non seulement fait double emploi avec celui-ci, mais encore, par son encombrement, oblige à décaler latéralement vers l'extérieur l'appui-bras fixe et l'organe de pilotage plus qu'il n'est nécessaire. En outre, il peut gêner le pilote pendant le pilotage.

On connaît déjà (US-A-4 012 014) un poste de pilotage comportant un siège à appui-bras ainsi qu'un organe mécanique de pilotage du type manche à balai actionnable par une seule main agencé sur le prolongement vers l'avant dudit appui-bras, ce dernier étant en deux parties, la première partie étant articulée audit siège au moyen de vis afin de pouvoir occuper une pluralité de positions fixes d'inclusions différentes et une seconde partie étant articulée sur la première partie autour d'un axe transversal avec des moyens d'inclinaison de la seconde partie par rapport à ladite première partie disposés entre lesdites parties.

Cependant, le mode de réalisation de cet appui-bras orientable est particulièrement peu commode.

La présente invention a pour objet de remédier à ces inconvénients et de proposer un appui-bras permettant d'aider à la conduite l'engins, et en particulier d'aéronefs, munis d'un organe pilotage latéral à une seule main, afin d'accroître la précision du pilotage. Un autre objet de l'invention est de réduire la fatigue du pilote en augmentant le confort de celui-ci pendant le pilotage manuel, ainsi que pendant la surveillance des paramètres de vol.

L'invention permet également de réaliser un siège adapté quelle que soit la morphologie du pilote.

A cette fin, selon l'invention, le poste de pilotage et le siège comportent les caractéristiques définies dans les revendications indépendantes 1 et 7.

Ainsi, selon l'invention, l'appui-bras du siège disposé du côté dudit organe mécanique de pilotage, grâce à ses réglages, peut remplir l'office de l'appui-bras latéral fixe associé à l'organe de pilotage sans en présenter les inconvénients.

On remarquera que, moyennant un glissement relatif de l'avant-bras du pilote par rapport à l'appui-bras, chaque position de réglage de celui-ci permet une certaine latitude dans la position du fauteuil du pilote par rapport à l'organe mécanique de pilotage. De toutes façons, pour chaque position relative de ce fauteuil par rapport audit organe mécanique de pilotage, l'ajustement de l'inclinaison de l'appui-bras peut se faire aisément, si l'on prévoit de monter le ou les organes de manœuvre desdits moyens de commande sur ledit appui-bras, de façon accessible pour la main correspondante. L'invention permet donc:

– le déplacement du siège ou uniquement du dossier, par exemple en fonction du mode de pilotage;

– l'adaptation à la morphologie du pilote;

– de faibles déplacements latéraux de l'avant-bras;

– l'agencement de l'organe de pilotage dans le prolongement exact dudit appui-bras, sans décalage vers l'extérieur.

L'appui-bras fixe latéral, spécifiquement associé à l'organe de pilotage, peut donc être supprimé.

Dans le cas usuel où ledit siège est pourvu d'un dossier réglable en position, il est avantageux que ledit axe d'articulation soit lié à la partie de support dudit siège, et non pas au dossier, de façon à pouvoir régler ledit dossier sans avoir à modifier la position dudit appui-bras.

Selon une réalisation de l'invention, ledit appui-bras est en au moins deux parties articulées l'une à l'autre autour d'un axe transversal, la partie arrière dudit appui-bras étant reliée audit siège. Dans ce cas, ladite partie arrière de l'appui-bras peut être reliée au siège de manière rigide. Cependant, pour pouvoir obtenir un réglage en hauteur, en plus du réglage en inclinaison fourni par l'articulation entre lesdites parties, il est préférable que ladite partie arrière de l'appui-bras soit reliée au siège de manière articulée autour d'un axe transversal. Quel que soit le mode de liaison de la partie arrière de l'appui-bras sur le siège, il est avantageux que la partie avant de celui-ci supporte une tablette d'appui rigide se prolongeant vers l'arrière au-dessus de ladite partie arrière. Ainsi, cette tablette rigide offre un appui continu, sans brisure, à l'avant-bras du pilote.

Les moyens de commande de l'appui-bras selon l'invention peuvent être de tout type connu, par exemple du type à tringlerie ou à broches filetées. De préférence, ils sont tels qu'ils permettent le relevage global de l'appui-bras, sans perte du réglage existant au moment de ce relevage. Il est également avantageux que leur structure permette le réglage de l'appui-bras par commande électrique ou analogue.

Les figures du dessin annexé feront bien comprendre comment l'invention peut être réalisée. Sur ces figures, des références identiques désignent des éléments semblables.

La fig. 1 est une vue schématique en élévation latérale d'un mode de réalisation de l'invention;

la fig. 2 est une vue en plan correspondant à la fig. 1;

la fig. 3 est une vue latérale schématique, à plus grande échelle et avec arrachement, illustrant le mécanisme des fig. 1 et 2;

la fig. 4 est une vue de dessus schématique partielle correspondant à la fig. 3, l'appui-bras étant dans une position différente.

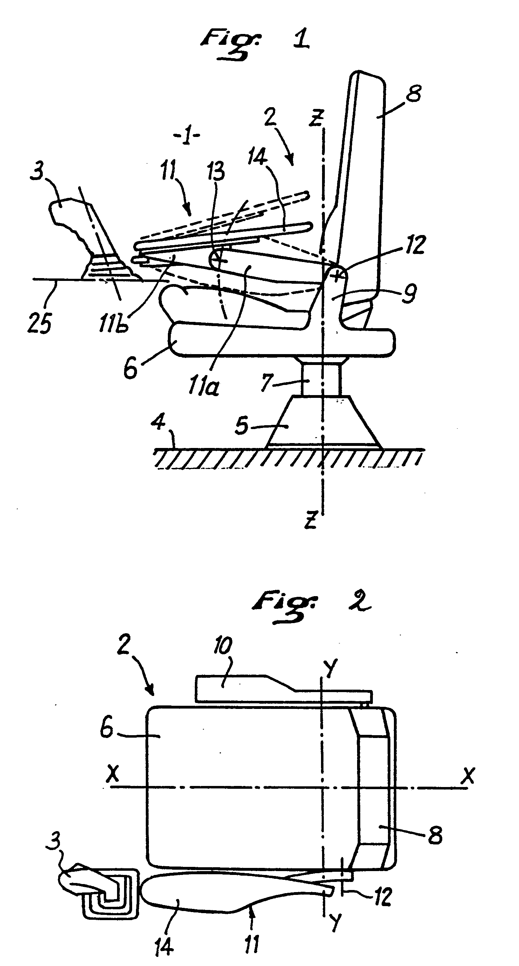

Sur les fig. 1 et 2, on a représenté partiellement un poste de pilotage 1 d'aéronef, comportant un fauteuil 2, ainsi qu'un organe mécanique de pilotage 3, du type manche à balai actionnable par une seule main et monté à poste fixe, sur une console latérale 25, dans ledit poste de pilotage.

Le fauteuil 2 est monté sur le plancher 4 du poste de pilotage 1 au moyen d'un système de fixation connu 5 permettant le réglage de la position dudit fauteuil par rapport aux commandes (non représentées) de l'aéronef, parallèlement à deux directions X–X et Y–Y orthogonales entre elles et respectivement parallèles à l'axe longitudinal et à l'axe transversal de l'aéronef.

Ainsi, le pilote peut facilement trouver ses distances horizontales par rapport auxdites commandes.

De plus, le siège 6 du fauteuil 2 peut être ajusté en hauteur grâce à un système 7, de type connu, permettant l'ajustement de la position dudit siège 6 le long de la direction Z–Z, orthogonale aux directions X–X et Y–Y.

Du côté arrière, c'est-à-dire du côté du dossier 8, le siège 6 du fauteuil 2 comporte deux supports parallèles 9, dirigés vers le haut, sur lesquels sont fixés deux appui-bras 10 et 11.

L'un de ces deux appui-bras, celui qui porte la référence 10, est de tout type connu et il est relié au fauteuil 2 par tout moyen connu.

En revanche, l'autre appui-bras 11, disposé juste en regard de l'organe mécanique de pilotage 3, présente une structure et/ou une fixation conformes à l'invention.

Dans le mode de réalisation des fig. 1 et 2, l'appui-bras 11 comporte une partie arrière 11a et une partie avant 11b. La partie arrière 11a est articulée, par son extrémité arrière, sur le support 9 correspondant autour de l'axe transversal 12, comme cela a été décrit ci-dessus. La partie avant 11b est articulée, par son extrémité arrière, sur l'extrémité avant de la partie arrière 11a, autour d'un axe transversal 13, de manière à pouvoir occuper une pluralité de positions réglables fixes d'inclinaisons différentes par rapport à la partie arrière 11a. Ainsi, dans le mode de réalisation des fig. 1 et 2, on peut non seulement régler l'inclinaison de la partie arrière 11a par rapport au siège 6, mais encore l'inclinaison de la partie avant 11b par rapport à la partie arrière 11a. Une tablette rigide d'appui 14 est solidaire de la partie avant 11b et prolonge celle-ci au-dessus de la partie arrière 11a. On voit ainsi que l'ajustement de l'inclinaison de la partie arrière 11a permet l'ajustement en hauteur de la tablette d'appui 14, tandis que l'ajustement de l'inclinaison de la partie avant 11b permet l'ajustement en inclinaison de ladite tablette 14. Sur la fig. 1, outre la position en trait plein, on a représenté pour l'appui-bras 11, deux positions en pointillés.

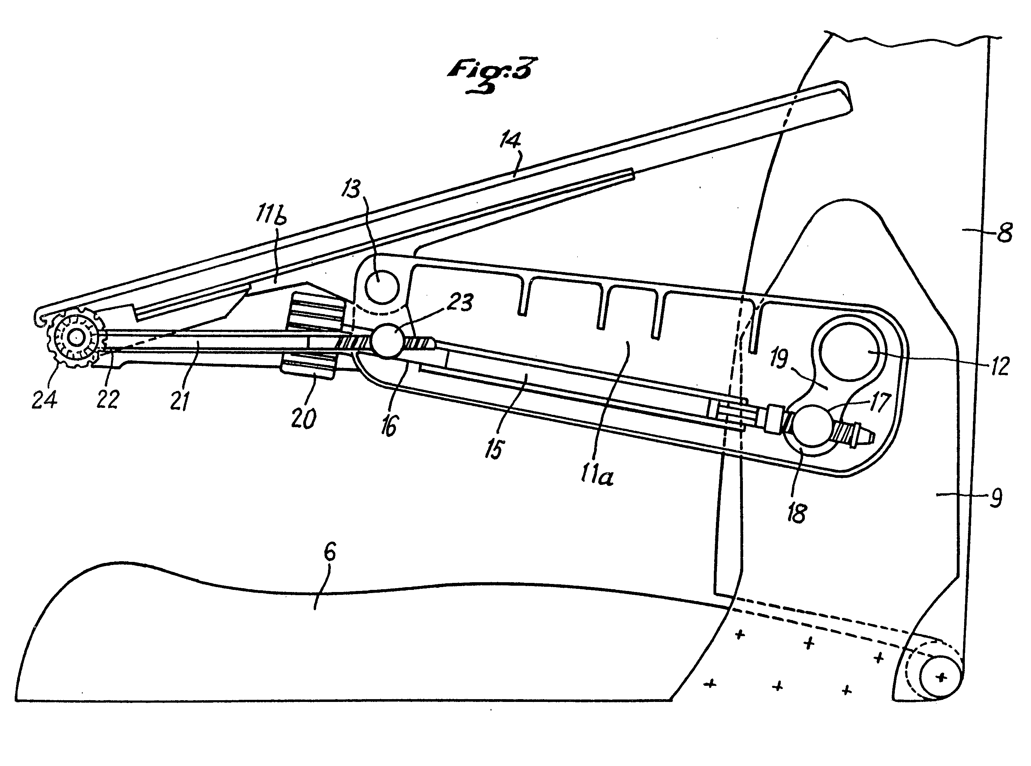

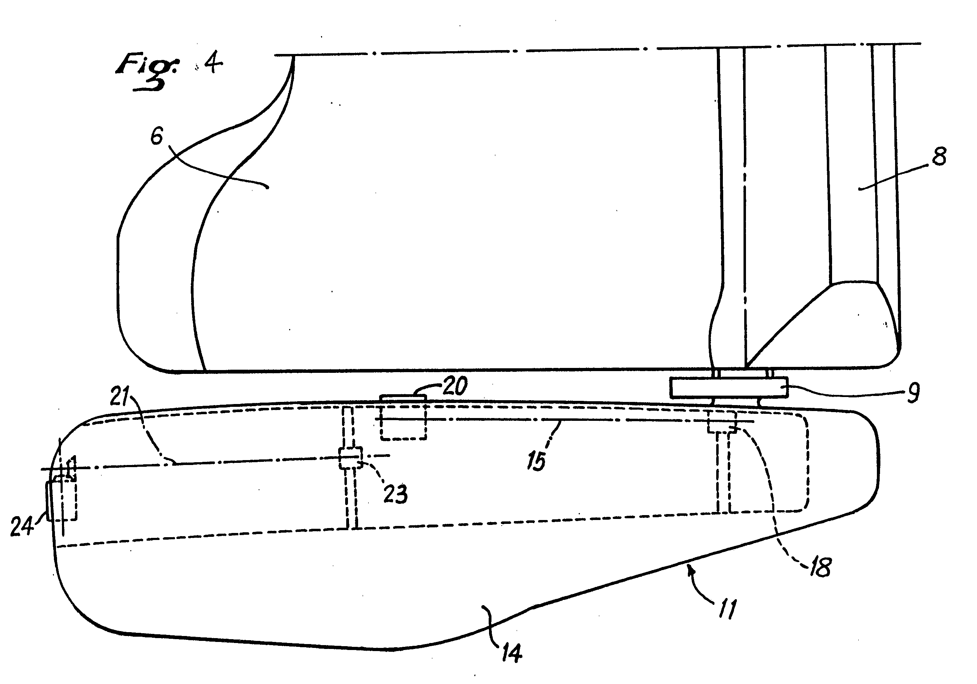

Les moyens de commande utilisés pour régler la position des appui-bras 11 des fig. 1 et 2 peuvent être de tout type approprié. Sur les fig. 3 et 4, on a représenté un exemple de réalisation de tels moyens de commande, plus particulièrement appropriés à l'appui-bras des fig. 1 et 2.

Comme on peut le voir sur la fig. 3, on prévoit pour le réglage de l'inclinaison de la partie arrière 11a par rapport au siège 6, une broche 15 tourillonnant, tout en étant axialement bloquée, dans un palier lisse 16 solidaire de ladite partie arrière 11a et engagée par une partie filetée dans une noix filetée 17, pouvant tourner dans l'extrêmité excentrée 18 d'une patte 19 montée rotative autour de l'axe 12.

La broche 15 est commandée en rotation par une molette 20, accessible sur le côté intérieur de l'appui-bras 11 (voir la fig. 4).

Par ailleurs, pour le réglage de l'inclinaison de la partie avant 11b par rapport à la partie arrière 11a, on prévoit une broche 21 tourillonnant, tout en étant axialement bloquée, dans un palier lisse 22 solidaire de ladite partie avant 11b et engagée par une partie filetée dans une noix filetée 23, montée rotative dans la partie arrière 11a, de façon excentrée par rapport à l'axe d'articulation 13. La broche 11 est commandée en rotation par une molette 24, accessible sur le côté avant de l'appui-bras (voir la fig. 6).

La fig. 3 illustre l'appui-bras 11 pour une position inclinée vers l'avant et le bas de la tablette d'appui 14, alors que sur la fig. 4 la position de cette tablette est supposée au moins sensiblement horizontale.

On voit que, lorsque d'appui-bras 11 est relevé dans son ensemble par pivotement autour de l'axe 12, les moyens de commande 15 à 24 maintiennent la position relative qu'un réglage déjà existant imposait aux parties 11a et 11b de l'appui-bras 11. Ainsi, lorsque cet appui-bras 11 est rabattu de nouveau en position d'utilisation, il n'est pas nécessaire de procéder à un nouveau réglage, dans la mesure où la position relative du siège 2 par rapport aux commandes de l'aéronef n'a pas été modifiée ou n'a été que peu modifiée. De toutes façons, le réglage de la hauteur (molette 20) et/ou de l'inclinaison (molette 24) de l'appui-bras 11 peut aisément être parfait, à tout instant, par actionnement desdites molettes 20 et 24 par la main destinée à commander l'organe mécanique de pilotage 3.

**Revendications**

1. Poste de pilotage (1), comportant un siège (2) à appui-bras (10, 11), ainsi qu'un organe mécanique de pilotage (3) du type manche à balai actionnable par une seule main et monté à un emplacement fixe dudit poste de pilotage, au moins approximativement en prolongement vers l'avant d'un appui-bras (11) dudit siège, la position dudit siège (2) étant réglable par rapport audit organe mécanique de pilotage (3), et ledit appui-bras (11) étant articulé autour d'un axe transversal (12) lié audit siège (2), afin de pouvoir occuper une pluralité de positions fixes d'inclinaisons différentes autour dudit axe, convergeant vers ledit organe mécanique de pilotage (3), ledit appui-bras (11) étant en au moins deux parties (11a, 11b) articulées l'une à l'autre autour d'un axe transversal (13), la partie arrière (11a) dudit appui-bras étant reliée audit siège et des moyens de commande de l'inclinaison de la partie avant (11b) dudit appui-bras par rapport à ladite partie arrière (11a) étant disposés entre lesdites parties avant et arrière.

2. Poste de pilotage selon la revendication 1, caractérisé en ce que le ou les organes de manœuvre (20, 24) desdits moyens de commande (15 à 24) sont montés sur ledit appui-bras (11), de façon accessible pour la main commandant ledit organe mécanique de pilotage (3).

3. Poste de pilotage selon l'une des revendications 1 ou 2, caractérisé en ce que ladite partie arrière (11a) de l'appui-bras est reliée au siège de manière rigide.

4. Poste de pilotage selon l'une des revendications 1 ou 2, caractérisé en ce que ladite partie arrière (11a) de l'appui-bras est reliée au siège de manière articulée autour d'une axe (12) transversal.

5. Poste de pilotage selon la revendication 4, caractérisé en ce que lesdits moyens de commande (15 à 24) permettent le relevage de l'appui-bras dans sa totalité, avec conservation du réglage existant au moment dudit relevage.

6. Poste de pilotage selon l'une quelconque des revendications 1 à 5, caractérisé en ce que ladite partie avant (11b) de l'appui-bras (11) supporte une tablette rigide (14) qui se prolonge vers l'arrière au-dessus de ladite partie arrière (11a).

7. Siège (2) à appui-bras (10, 11), destiné à un poste de pilotage comportant un organe mécanique de pilotage du type manche à balai actionnable par une seule main et monté à un emplacement fixe dudit poste de pilotage au moins approximativement en prolongement vers l'avant d'un appui-bras dudit siège, la position dudit siège (2) étant réglable par rapport audit organe mécanique de pilotage (3), et ledit appui-bras (11) étant articulée autour d'un axe transversal (12) lié audit siège (2), afin de pouvoir occuper une pluralité de positions fixes d'inclinaisons différentes autour dudit axe, convergeant vers ledit organe mécanique de pilotage (3), ledit appui-bras (11) étant en au moins deux parties (11a, 11b) articulées l'une à l'autre autour d'un axe transversal (13), la partie arrière (11a) dudit appui-bras étant reliée audit siège et des moyens de commande de l'inclinaison de la partie avant (11b) dudit appui-bras par rapport à ladite partie arrière (11a) étant disposés entre lesdites parties avant et arrière.

**Patentansprüche**

1. Cockpit (1) mit einem Sitz (2) mit Armlehne oder -stütze (10, 11) sowie einer mechanischen Steuereinrichtung (3) nach Art eines Steuerknüppels, die mit einer Hand betätigt werden kann und an einem festen Standort des Cockpits zumindest annähernd in der Verlängerung zum vorderen Teil der Armstütze (11) des Sitzes (2) eingesetzt ist, wobei die Stellung des Sitzes (2) gegenüber der mechanischen Steuereinrichtung (3) regelbar ist und die Armstütze (11) um eine mit dem Sitz verbundene transversale Achse (12) angelenkt ist, um mehrere unterschiedliche feste Neigungsstellungen um die Achse zur mechanischen Steuereinrichtung (3) konvergierend einnehmen zu können, die Armstütze (11) aus zumindest zwei um eine transversale Achse (13) zueinander angelenkten Teilen (11a, 11b) besteht, wobei der hintere Teil (11a) der Armstütze mit dem Sitz verbunden ist und eine Neigungssteuereinrichtung des vorderen Teils (11b) der Armstütze gegenüber dem hinteren Teil (11a) zwischen dem vorderen und hinteren Teil liegt.

2. Cockpit nach Anspruch 1, dadurch gekennzeichnet, dass die Betätigungsorgane (20, 24) der Steuerung (15 bis 24) dergestalt auf der Armstütze (11) eingesetzt sind, dass sie für die auf die mechanische Steuereinrichtung (3) ausgeübte Einwirkung von Hand zugänglich sind.

3. Cockpit nach einem der Ansprüche 1 oder 2, dadurch gekennzeichnet, dass der hintere Teil (11a) der Armstütze mit dem Sitz starr verbunden ist.

4. Cockpit nach einem der Ansprüche 1 oder 2, dadurch gekennzeichnet, dass der hintere Teil (11a) der Armstütze mit dem Sitz gelenkig um eine transversale Achse (12) verbunden ist.

5. Cockpit nach Anspruch 4, dadurch gekennzeichnet, dass die Steuerung (15 bis 24) das Anheben der Armstütze in seiner Gesamtheit unter Beibehaltung der zum Zeitpunkt des Anhebens bestehenden Regelung zulässt.

6. Cockpit nach einem der vorhergehenden Ansprüche 1 bis 5, dadurch gekennzeichnet, dass der vordere Teil (11b) der Armstütze (11) eine starre Platte (14) trägt, die sich nach hinten über den hinteren Teil (11a) verlängert.

7. Sitz (2) mit Armlehne oder -stütze (10, 11) zur Verwendung in einem Cockpit mit einer mechanischen Steuereinrichtung (3) nach Art eines Steuerknüppels, die mit einer Hand betätigt werden kann und an einem festen Standort des Cockpits zumindest annähernd in der Verlängerung zum vorderen Teil der Armstütze des Sitzes eingesetzt ist, wobei die Stellung des Sitzes (2) gegenüber der mechanischen Steuereinrichtung (3) regelbar ist und die Armstütze (11) um eine mit dem Sitz (2) verbundene transversale Achse (12) angelenkt ist, um mehrere unterschiedliche feste Neigungsstellungen um die Achse zur mechanischen Steuereinrichtung (3) konvergierend einnehmen zu können, die Armstütze (11) aus zumindest zwei um eine transversale Achse (13) zueinander angelenkten Teilen (11a, 11b) besteht, wobei der hintere Teil (11a) der Armstütze mit dem Sitz verbunden ist und eine Neigungssteuereinrichtung des vorderen Teils (11b) der Armstütze gegenüber dem hinteren Teil (11a) zwischen dem vorderen und hinteren Teil liegt.

**Claims**

1. Cockpit (1), comprising a seat (2) with armrest (10, 11), as well as a mechanical control member (3) of the control stick type adapted to be actuated by one hand and mounted at a fixed location in said cockpit, at least substantially in forward extension of an armrest (11) of said seat, the position of said seat (2) being adjustable with respect to said mechanical control member (3), and said armrest (11) being articulated about a transverse axis (12) connected to said seat (2), in order to be able to occupy a plurality of fixed positions of different inclinations about said axis, converging towards said mechanical control member (3), said armrest (11) being in at least two parts (11a, 11b) articulated one to the other about a transverse axis (13), the rear part (11a) of said armrest being connected to said seat and means for controlling the inclination of the front part (11b) of said armrest with respect to said rear part (11a) being disposed between said front and rear parts.

2. Cockpit according to claim 1, characterized in that the member or members (20, 24) for manoeuvring said control means (15 to 24) are mounted on said armrest (11) so as to be accessible to the hand controlling said mechanical control member (3).

3. Cockpit according to one of claims 1 or 2, characterized in that said rear part (11a) of the armrest is connected rigidly to the seat.

4. Cockpit according to one of claims 1 or 2, characterized in that said rear part (11a) of the armrest is connected to the seat in articulated manner about a transverse axis (12).

5. Cockpit according to claim 4, characterized in that said control means (15 to 24) allow the whole of the armrest to be raised, with conservation of the adjustment existing at the moment of said lifting.

6. Cockpit according to any one of claims 1 to 5, characterized in that said front part (11b) of the armrest (11) supports a rigid table (14) which extends rearwardly above said rear part (11a).

7. Seat (2) with armrest (10, 11), intended for a cockpit comprising a mechanical control member of the control stick type adapted to be actuated by one hand and mounted at a fixed location in said cockpit, at least substantially in forward extension of an armrest of said seat, the position of said seat (2) being adjustable with respect to said mechanical control member (3), and said armrest (11) being articulated about a transverse axis (12) connected to said seat (2), in order to be able to occupy a plurality of fixed positions of different inclinations about said axis, converging towards said mechanical control member (3), said armrest (11) being in at least two parts (11a, 11b) articulated one to the other about a transverse axis (13), the rear part (11a) of said armrest being connected to said seat and means for controlling the inclination of the front part (11b) of said armrest with respect to said rear part (11a) being disposed between said front and rear parts.

Fig. 1

Fig. 2

0191665

Fig.3

*Fig. 4*

6

8

20

9

21

15

24

23

18

11

14

0 191 665